(19) Europäisches Patentamt
European Patent Office
Office européen des brevets

(11) EP 4 485 574 B1

(12) **EUROPEAN PATENT SPECIFICATION**

(45) Date of publication and mention of the grant of the patent:
**17.06.2026 Bulletin 2026/25**

(21) Application number: **23759702.6**

(22) Date of filing: **09.02.2023**

(51) International Patent Classification (IPC):
***C01G 53/00*** *(2025.01)* ***H01M 4/525*** *(2010.01)*
***H01M 4/36*** *(2006.01)*

(52) Cooperative Patent Classification (CPC):
**H01M 4/525; C01G 53/04; C01G 53/05; C01G 53/506; C01G 53/80; C01G 53/84; H01M 4/366; H01M 4/62;** C01P 2002/52; C01P 2002/54; C01P 2004/45; C01P 2006/40; C01P 2006/80; H01M 10/052; Y02E 60/10

(86) International application number:
**PCT/JP2023/004354**

(87) International publication number:
**WO 2023/162698 (31.08.2023 Gazette 2023/35)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT

MATÉRIAU ACTIF D'ÉLECTRODE POSITIVE POUR BATTERIES SECONDAIRES À ÉLECTROLYTE NON AQUEUX, ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.02.2022 JP 2022027509**

(43) Date of publication of application:
**01.01.2025 Bulletin 2025/01**

(73) Proprietor: **Panasonic Intellectual Property Management Co., Ltd.**
**Kadoma-shi, Osaka 571-0057 (JP)**

(72) Inventors:
- **TOGO, Masakazu**
  **Kadoma-shi, Osaka 571-0057 (JP)**
- **KAWAKITA, Akihiro**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**
- **DEGUCHI, Masaki**
  **Kadoma-shi, Osaka 571-0057 (JP)**

(74) Representative: **Novagraaf International SA**
**Chemin de l'Echo 3**
**1213 Onex, Geneva (CH)**

(56) References cited:
**WO-A1-2021/106324 JP-A- 2019 169 286**

- **NI LIANSHAN ET AL: "Atomical Reconstruction and Cationic Reordering for Nickel-Rich Layered Cathodes", vol. 12, no. 11, 29 January 2022 (2022-01-29), Weinheim, XP093275582, ISSN: 1614-6832, Retrieved from the Internet <URL:https://onlinelibrary.wiley.com/doi/full-xml/10.1002/aenm.202103757> DOI: 10.1002/aenm.202103757**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- MURUGAN VIVEKANANTHA ET AL: "Modulating Anion Redox Activity of Li 1.2 Mn 0.54 Ni 0.13 Co 0.13 O 2 through Strong Sr-O Bonds toward Achieving Stable Li-Ion Half-/Full-Cell Performance", ACS APPLIED ENERGY MATERIALS, vol. 4, no. 10, 28 September 2021 (2021-09-28), United States, pages 11234 - 11247, XP093275598, ISSN: 2574-0962, DOI: 10.1021/acsaem.1c02090
- SAVAS UYGUR CANSU ET AL: "Effect of calcium or yttrium doping on cation ordering and electrochemical performance of Li(Ni0.80-xCo0.15Al0.05Mx)O2 (M = Ca, Y) as a Li-ion battery cathode", MATERIALS SCIENCE AND ENGINEERING: B, ELSEVIER, AMSTERDAM, NL, vol. 264, 16 November 2020 (2020-11-16), XP086424564, ISSN: 0921-5107, [retrieved on 20201116], DOI: 10.1016/J.MSEB.2020.114925

## Description

TECHNICAL FIELD

The present disclosure relates to a positive electrode active material for a non-aqueous electrolyte secondary battery and a non-aqueous electrolyte secondary battery.

BACKGROUND ART

In recent years, non-aqueous electrolyte secondary batteries have been widely used as a power source for an electric vehicle, a power storage device for utilizing natural energy, and the like. Characteristics required for a positive electrode active material used for the non-aqueous electrolyte secondary battery have also varied depending on the use. For example, Patent Literature 1 discloses a positive electrode active material in which a lithium sulfonate salt compound adheres to a surface of lithium titanate, and describes that this positive electrode active material has excellent storage characteristics at high temperature.

CITATION LIST

PATENT LITERATURE

PATENT LITERATURE 1: Japanese Unexamined Patent Application Publication No. 2018-6164
WO2021106324 discloses $Li_{0.99}Ni_{0.82}Mn_{0.03}Co_{0.15}Sr_{0.01}Ca_{0.001}O_2$ as cathode material.

SUMMARY

Lithium nickelate ($LiNiO_2$) is known to have a high energy density, and by partially replacing Ni with Co, Al, Mn, or the like, battery characteristics such as reliability can be improved. However, a lithium-containing composite oxide containing Ni as a main component easily causes side reactions with a non-aqueous electrolyte, and thus easily reduces a battery capacity due to charge and discharge. A secondary battery using such a lithium-containing composite oxide may have increased direct-current resistance (DCIR). The art in Patent Literature 1 does not consider achievement of both the charge-discharge cycle characteristics and the direct-current resistance, and still has room for improvement.
It is an advantage of the present disclosure to provide a positive electrode active material that improves the charge-discharge cycle characteristics of the battery and reduces the direct-current resistance.
A positive electrode active material for a non-aqueous electrolyte secondary battery of an aspect of the present disclosure includes a lithium-containing composite oxide having a layered rock-salt structure, wherein the lithium-containing composite oxide contains at least Ni, Ca, and Sr, in the lithium-containing composite oxide, a mole ratio of a content of Ca to a content of Sr (Ca/Sr ratio) is greater than or equal to 1, a sum of the content of Ca and the content of Sr in the lithium-containing composite oxide is greater than or equal to 0.05 mol% and less than or equal to 1 mol% relative to a total amount of moles of metal elements in the lithium-containing composite oxide excluding Li, Ca, and Sr, the lithium-containing composite oxide includes secondary particles each formed by aggregation of primary particles, and on surfaces of the secondary particles or on interfaces between the primary particles, a sulfonate compound represented by the formula I is present,

[Formula 1]

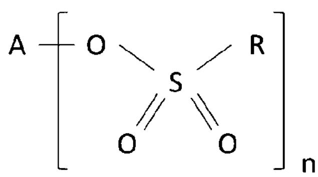

(I)

wherein A represents a group I element or a group II element, R represents a hydrocarbon group, and "n" represents 1 or 2 and wherein the lithium-containing composite oxide is represented by the general formula $Li_a Ni_x Co_y Al_z Ml_w Ca_s Sr_t O_{2-b}$, wherein $0.8 \leq a \leq 1.2$, $0.80 \leq x \leq 0.95$, $0 \leq y \leq 0.20$, $0 \leq z \leq 0.20$, $0 \leq w \leq 0.20$, $0.0004 \leq s \leq 0.008$, $0.0002 \leq t \leq 0.002$, $0 \leq b < 0.05$, $x+y+z+w= 1$, $1 \leq s/t \leq 40$, and M1 represents at least one element selected from the group consisting of Mn, Fe, Ti, Si, Nb, Zr, Mo, and Zn.
A non-aqueous electrolyte secondary battery of an aspect of the present disclosure comprises: a positive

electrode including the above positive electrode active material for the non-aqueous electrolyte secondary battery; a negative electrode; and a non-aqueous electrolyte.

According to the positive electrode active material for a non-aqueous electrolyte secondary battery of an aspect of the present disclosure, the non-aqueous electrolyte secondary battery having excellent charge-discharge cycle characteristics and reduced direct-current resistance may be provided.

BRIEF DESCRIPTION OF DRAWING

FIG. 1 is a vertical sectional view of a non-aqueous electrolyte secondary battery of an example of an embodiment.

DESCRIPTION OF EMBODIMENTS

A layered rock-salt structure of a lithium-containing composite oxide includes a layer of transition metal such as Ni, a Li layer, and an oxygen layer, and by the Li layer reversibly intercalating and deintercalating Li ions present therein, charge-discharge reactions of a battery proceed. It is commonly known that a lithium-containing composite oxide containing Ni as a main component is a positive electrode active material having a high capacity. However, a secondary battery using such a lithium-containing composite oxide easily causes side reactions with a non-aqueous electrolyte, and thus easily reduces a battery capacity due to charge and discharge. The secondary battery using such a lithium-containing composite oxide may have increased direct-current resistance (DCIR).

Accordingly, the present inventors have made intensive investigation to solve the above problem, and consequently found that the direct-current resistance can be reduced while improving the charge-discharge cycle characteristics of the battery by using Ca, Sr, and a sulfonate compound. It is considered that containing predetermined amounts of Ca and Sr in the lithium-containing composite oxide at a predetermined ratio and allowing the sulfonate compound represented by the general formula I to be present on surfaces of secondary particles or on interfaces between primary particles of the lithium-containing composite oxide can reduce the direct-current resistance while protecting the lithium-containing composite oxide from the non-aqueous electrolyte. Particularly, it is presumed that containing Ca and Sr in the lithium-containing composite oxide under the above predetermined conditions improves dispersibility of Sr, which easily aggregates compared with Ca, to enable specific achievement of both the charge-discharge cycle characteristics and the direct-current resistance.

[Formula 2]

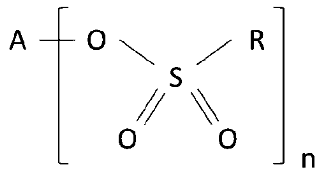

(I)

In the formula, A represents a group I element or a group II element, R represents a hydrocarbon group, and "n" represents 1 or 2.

Hereinafter, an example of an embodiment of the non-aqueous electrolyte secondary battery according to the present disclosure will be described in detail. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior, a coin-shaped exterior, or a battery case composed of a laminated sheet including a metal layer and a resin layer.

FIG. 1 is a vertical sectional view of a non-aqueous electrolyte secondary battery 10 of an example of an embodiment. As exemplified in FIG. 1, the non-aqueous electrolyte secondary battery 10 comprises an electrode assembly 14, a non-aqueous electrolyte (not illustrated), and a battery case 15 housing the electrode assembly 14 and the non-aqueous electrolyte. The electrode assembly 14 has a wound structure in which a positive electrode 11 and a negative electrode 12 are wound via a separator 13. The battery case 15 is composed of a bottomed cylindrical exterior housing can 16 and a sealing assembly 17 sealing an opening of the exterior housing can 16.

The electrode assembly 14 is composed of the band-shaped positive electrode 11, the band-shaped negative electrode 12, two of the band-shaped separators 13, a positive electrode tab 20 bonded to the positive electrode 11, and a negative electrode tab 21 bonded to the negative electrode 12. To prevent precipitation of lithium, the negative electrode 12 is formed to be one size larger than the positive electrode 11. That is, the negative electrode 12 is formed to be longer than

the positive electrode 11 in a longitudinal direction and a width direction (short direction). The two separators 13 are formed to be one size larger than at least the positive electrode 11, and disposed to, for example, sandwich the positive electrode 11.

The non-aqueous electrolyte secondary battery 10 comprises insulating plates 18 and 19 disposed on the upper and lower sides of the electrode assembly 14, respectively. In the example illustrated in FIG. 1, the positive electrode tab 20 attached to the positive electrode 11 extends through a through hole in the insulating plate 18 toward a side of the sealing assembly 17, and the negative electrode tab 21 attached to the negative electrode 12 extends along an outside of the insulating plate 19 toward the bottom side of the exterior housing can 16. The positive electrode tab 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tab 21 is connected to a bottom inner surface of the exterior housing can 16 by welding or the like, and the exterior housing can 16 becomes a negative electrode terminal.

The exterior housing can 16 is, for example, a bottomed cylindrical metallic container. A gasket 28 is provided between the exterior housing can 16 and the sealing assembly 17 to seal the inside space of the battery case 15. The exterior housing can 16 has a grooved portion 22 that is formed by, for example, pressing a side wall thereof from the outside and that supports the sealing assembly 17. The grooved portion 22 is preferably formed in a circular shape along a circumferential direction of the exterior housing can 16, and supports the sealing assembly 17 with the upper surface thereof.

The sealing assembly 17 has a structure having the bottom plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central parts thereof, and the insulating member 25 is interposed between the respective circumferential parts thereof. If the internal pressure of the battery increases due to abnormal heat generation, the lower vent member 24 is deformed so as to push the upper vent member 26 toward the cap 27 side and breaks, resulting in cutting off of an electrical pathway between the lower vent member 24 and the upper vent member 26. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the non-aqueous electrolyte secondary battery 10, particularly a positive electrode active material included in a positive electrode mixture layer 31 constituting the positive electrode 11, will be described in detail.

[Positive Electrode]

The positive electrode 11 has a positive electrode current collector 30 and the positive electrode mixture layer 31 formed on a surface of the positive electrode current collector 30. The positive electrode mixture layer 31 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 31 may include the positive electrode active material, a conductive agent, and a binder. A thickness of the positive electrode mixture layer 31 is, for example, greater than or equal to 10 μm and less than or equal to 150 μm on one side of the positive electrode current collector 30. The positive electrode 11 may be produced by, for example, applying a positive electrode slurry including the positive electrode active material, the conductive agent, the binder, and the like on the surface of the positive electrode current collector 30, and drying and subsequently compressing the coating film to form the positive electrode mixture layer 31 on both surfaces of the positive electrode current collector 30.

Examples of the conductive agent included in the positive electrode mixture layer 31 may include a carbon-based material such as carbon black (CB), acetylene black (AB), Ketjenblack, carbon nanotube (CNT), graphite, and graphite. These may be used singly, or may be used in combination of two or more thereof.

Examples of the binder included in the positive electrode mixture layer 31 include a fluororesin such as polytetrafluoroethylene (PTFE) and polyvinylidene fluoride (PVdF), a polyimide resin, an acrylic resin, a polyolefin resin, and polyacrylonitrile (PAN). These may be used singly, or may be used in combination of two or more thereof.

The positive electrode active material included in the positive electrode mixture layer 31 includes a lithium-containing composite oxide having a layered rock-salt structure. Examples of the layered rock-salt structure of the lithium-containing composite oxide include a layered rock-salt structure belonging to the space group R-3m and a layered rock-salt structure belonging to the space group C2/m. The lithium-containing composite oxide preferably has the layered rock-salt structure belonging to the space group R-3m from the viewpoints of increase in the capacity and stability of the crystal structure. The layered rock-salt structure of the lithium-containing composite oxide may include a layer of transition metal, a Li layer, and an oxygen layer.

The lithium-containing composite oxide includes secondary particles each formed by aggregation of primary particles. A particle diameter of the primary particles constituting the secondary particles is, for example, greater than or equal to 0.02 μm and less than or equal to 2 μm. The particle diameter of the primary particles is measured as a diameter of a circumscribed circle in a particle image observed with a scanning electron microscope (SEM).

An average particle diameter of the secondary particles of the lithium-containing composite oxide is, for example, greater than or equal to 2 μm and less than or equal to 30 μm. Here, the average particle diameter means a median diameter (D50) on a volumetric basis. The D50 means a particle diameter at which a cumulative frequency is 50% from a smaller particle diameter side in a particle size distribution on a volumetric basis. The particle size distribution of the secondary particles can be measured by using a laser diffraction-type particle size distribution measuring device (for example, MT3000II, manufactured by MicrotracBEL Corp.) with water as a dispersion medium.

A ratio of an outer circumferential length of the primary particles divided by an outer circumferential length of the secondary particles (hereinafter, referred to as "ratio of primary particle outer circumferential length / secondary particle outer circumferential length") is preferably less than or equal to 0.12, more preferably less than or equal to 0.10, and particularly preferably less than or equal to 0.08. A lower limit of the ratio of a primary particle outer circumferential length / a secondary particle outer circumferential length is, for example, 0.02.

The outer circumferential length of the primary particle and the outer circumferential length of the secondary particle can be calculated in the following procedure.

(1) A cross section of the positive electrode is observed by using a scanning electron microscope (SEM) to photograph a sectional image including approximately 30 secondary particles.
(2) Areas of all the secondary particles are calculated from contrast difference of this sectional image, and an average of these areas is specified as an average area. From this average area, a circle-equivalent diameter of the secondary particle is calculated.
(3) Then, a sectional image including approximately 30 primary particles is photographed.
(4) Areas of all the primary particles are calculated from contrast difference of this sectional image, and an average of these areas is specified as an average area. From this average area, a circle-equivalent diameter of the primary particle is calculated.
(5) The above steps (1) to (4) are performed three times. An average of the obtained circle-equivalent diameter of the secondary particle is specified as the outer circumferential length of the secondary particle, and an average of the obtained circle-equivalent diameter of the primary particle is specified as the outer circumferential length of the primary particle.

The lithium-containing composite oxide contains at least Ni, Ca, and Sr. A content of Ni in the lithium-containing composite oxide is preferably greater than or equal to 80 mol%, and more preferably greater than or equal to 90 mol% relative to a total amount of metal elements excluding Li, Ca, and Sr. This yields the battery having a higher capacity. Note that the content of the metal element contained in the lithium-containing composite oxide is measured by, for example, inductively coupled plasma (ICP) atomic emission spectrometry.

The sum of the content of Ca and the content of Sr in the lithium-containing composite oxide is greater than or equal to 0.05 mol% and less than or equal to 1 mol% relative to the total amount of moles of metal elements in the lithium-containing composite oxide excluding Li, Ca, and Sr. In the lithium-containing composite oxide, a mole ratio of a content of Ca to a content of Sr (Ca/Sr ratio) is greater than or equal to 1. This improves dispersibility of Sr, and can protect the lithium-containing composite oxide from the non-aqueous electrolyte. An upper limit of the Ca/Sr ratio is, for example, 40.

A content of Ca in the lithium-containing composite oxide is preferably less than or equal to 0.8 mol%, more preferably less than or equal to 0.6 mol%, and particularly preferably less than or equal to 0.4 mol% relative to a total amount of moles of metal elements in the lithium-containing composite oxide excluding Li, Ca, and Sr. A lower limit of the content of Ca in the lithium-containing composite oxide is, for example, 0.04 mol%.

A content of Sr in the lithium-containing composite oxide is preferably less than or equal to 0.2 mol%, more preferably less than or equal to 0.18 mol%, and particularly preferably less than or equal to 0.15 mol% relative to a total amount of moles of metal elements in the lithium-containing composite oxide excluding Li, Ca, and Sr. A lower limit of the content of Sr in the lithium-containing composite oxide is, for example, 0.02 mol%.

The lithium-containing composite oxide is represented by the general formula $Li_aNi_xCo_yAl_zM1_wCa_sSr_tO_{2-b}$, wherein $0.8 \le a \le 1.2$, $0.80 \le x \le 0.95$, $0 \le y \le 0.20$, $0 \le z \le 0.20$, $0 \le w \le 0.20$, $0.0004 \le s \le 0.008$, $0.0002 \le t \le 0.002$, $0 \le b < 0.05$, $x+y+z+tw=1$, $1 \le s/t \le 40$, and M1 represents at least one element selected from the group consisting of Mn, Fe, Ti, Si, Nb, Zr, Mo, and Zn. M1 preferably represents Mn.

On surfaces of the secondary particles or on interfaces between the primary particles of the lithium-containing composite oxide, a sulfonate compound represented by the formula I is present,

[Formula 3]

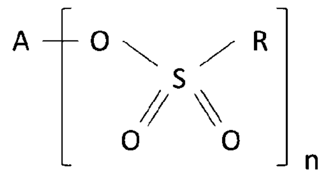

(I)

wherein A represents a group I element or a group II element, R represents a hydrocarbon group, and "n" represents 1 or 2.

In the general formula I, A preferably represents a group I element, and more preferably represents Li. This can further improve the output characteristics. When A represents a group I element, n=1.

In the general formula I, R preferably represents an alkyl group. R more preferably represents an alkyl group having less than or equal to 5 carbon atoms, further preferably represents an alkyl group having less than or equal to 3 carbon atoms, and particularly preferably represents a methyl group. Some of hydrogen bonded to carbon in R may be replaced with fluorine. Note that, not all hydrogen bonded to carbon in R are replaced with fluorine. A smaller molecular weight of R can further reduce reaction resistance.

Examples of the sulfonate compound include lithium methanesulfonate, lithium ethanesulfonate, lithium propanesulfonate, sodium methanesulfonate, magnesium methanesulfonate, and lithium fluoromethanesulfonate.

An amount of the sulfonate compound present on the surface of the secondary particles and on the interfaces between the primary particles of the lithium-containing composite oxide is preferably greater than or equal to 0.1 mass% and less than or equal to 1 mass% relative to a mass of the lithium-containing composite oxide.

The presence of the sulfonate compound on the surface of the secondary particles and on the interfaces between the primary particles of the lithium-containing composite oxide can be confirmed by Fourier transformation infrared spectrometry (FT-IR). In an infrared absorption spectrum obtained by FT-IR, the positive electrode active material may have an absorption peak at least greater than or equal to one of positions near 1238 $cm^{-1}$, 1175 $cm^{-1}$, 1065 $cm^{-1}$, and 785 $cm^{-1}$.

In the infrared absorption spectrum obtained by FT-IR, for example, the positive electrode active material including lithium methanesulfonate has absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are absorption peaks attributed to an SO stretching vibration derived from lithium methanesulfonate. The peak near 785 $cm^{-1}$ is an absorption peak attributed to a CS stretching vibration derived from lithium methanesulfonate.

In the positive electrode active material including a sulfonate compound other than lithium methanesulfonate, the absorption peak derived from the sulfonate compound included in the positive electrode active material can be identified similarly to the positive electrode active material including lithium methanesulfonate. The presence of the sulfonate compound on the surface of the secondary particles and on the interfaces between the primary particles of the lithium-containing composite oxide can also be confirmed by ICP, atomic absorption, X-ray photoelectron spectrometry (XPS), radiation XRD measurement, TOF-SIMS, and the like.

An average particle diameter of the sulfonate compound is preferably less than or equal to 10 $\mu$m, more preferably less than or equal to 5 $\mu$m, and further preferably less than or equal to 3 $\mu$m. By setting the average particle diameter of the sulfonate compound to preferably less than or equal to 10 $\mu$m, more preferably less than or equal to 5 $\mu$m, and further preferably less than or equal to 3 $\mu$m, the sulfonate compound can adhere to an entirety of the positive electrode active material powder more uniformly, and the effect by the sulfonate compound can be exhibited more remarkably. A lower limit of the average particle diameter of the sulfonate compound is, for example, 0.1 $\mu$m. Here, the average particle diameter of the sulfonate compound can be determined by observing the sulfonate compound adhering to the surface of the secondary particles and on the interfaces between the primary particles of the lithium-containing composite oxide with an SEM. Specifically, outer shapes of randomly selected 50 particles are specified, and a major diameter (the longest diameter) of each of the 50 particles is determined to specify an average value thereof as the average particle diameter of the sulfonate compound.

From the viewpoint of protection of the lithium-containing composite oxide, Ca and Sr are preferably present on the surface of the secondary particles and on the interfaces between the primary particles of the lithium-containing composite oxide. Here, Ca and Sr present on the interfaces between the primary particles of the lithium-containing composite oxide refers to a state where Ca and Sr are contacted with grain boundaries of the primary particles or a state where Ca and Sr are present within a range of less than or equal to 10 nm from grain boundary of the primary particles. A part of Ca and Sr may form a solid solution with the lithium-containing composite oxide. For example, a part of Ca and Sr may form a solid solution with the lithium-containing composite oxide, and a part of the other portion may be present on the surfaces of the primary particles of the lithium-containing composite oxide.

On the surface of the secondary particles or on the interfaces between the primary particles of the lithium-containing composite oxide, Ca and Sr may form a Ca compound or a Sr compound. Examples of the Ca compound may

include CaO, $Ca(OH)_2$, and $CaCO_3$. Examples of the Sr compound may include SrO, $Sr(OH)_2$, and $SrCO_3$.

On the surface of the secondary particles and on the interfaces between the primary particles of the lithium-containing composite oxide, a metal compound other than the Ca compound and the Sr compound may be present. This metal compound includes, for example, one or more metal elements selected from the group consisting of W, Zr, rare-earth elements, and Al. Examples of the compound containing W may include $WO_3$ and lithium tungstate ($Li_2WO_4$, $Li_4WO_5$, and $Li_6W_2O_9$). Examples of the compound containing Al may include $Al_2O_3$. Examples of the compound containing Zr may include $ZrO_2$, $Zr(OH)_4$, $Zr(CO_3)_2$, and $Zr(SO_4)_2 \cdot 4H_2O$. Examples of the compound containing the rare earth element may include an oxide, a hydroxide, a carbonate salt, a sulfate salt, a nitrate salt, and a phosphate salt of the rare earth elements. On the surface of the secondary particles and on the interfaces between the primary particles of the lithium-containing composite oxide, a metal compound containing Ca or Sr and another metal element may be present. Examples of such a metal component may include $SrAlO_4$ and $CaAlO_4$.

On the surface of the secondary particles and on the interfaces between the primary particles of the lithium-containing composite oxide, a nonmetallic compound may be present. The nonmetallic compound includes, for example, one or more nonmetallic elements selected from the group consisting of P and B. Examples of the compound containing P may include $Li_{3-x}H_xPO_4$ ($0 \leq x \leq 3$). Examples of the compound containing B may include $H_3BO_3$, $Li_3BO_3$, and $Li_2B_4O_7$.

The positive electrode mixture layer 31 may include another positive electrode active material in addition to the positive electrode active material of the aforementioned present embodiment. Examples of the other positive electrode active material include a lithium-containing composite oxide not containing Ca or Sr.

Next, an example of a method for manufacturing the positive electrode active material according to the present embodiment will be described. The method for manufacturing the positive electrode active material includes, for example, a synthesis step, a washing step, an adding step, and a drying step.

In the synthesis step, a metal oxide containing Ni, a Li raw material, a Ca raw material, and a Sr raw material are mixed and calcined to obtain the lithium-containing composite oxide, for example.

The metal oxide can be obtained by, for example, while stirring a solution of metal salts including Ni and the optional metal elements (such as Co, Al and Mn), a solution of an alkali such as sodium hydroxide is added dropwise to adjust a pH on the alkaline side (for example, greater than or equal to 8.5 and less than or equal to 12.5) to precipitate (coprecipitate) a composite hydroxide including Ni and the optional metal elements, and thermally treating this composite hydroxide. The thermal treatment temperature is not particularly limited, and may be, for example, within a range of greater than or equal to 300°C and less than or equal to 600°C.

Examples of the Li raw material include $Li_2CO_3$, LiOH, $Li_2O_2$, $Li_2O$, $LiNO_3$, $LiNO_2$, $Li_2SO_4$, $LiOH \cdot H_2O$, LiH, and LiF. Examples of the Ca raw material include $Ca(OH)_2$, CaO, $CaCO_3$, $CaSO_4$, $Ca(NO_3)_2$, $CaCl_2$, and $CaAlO_4$. Examples of the Sr raw material include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$.

A mixing ratio between the metal oxide, the Li raw material, the Ca raw material, and the Sr raw material is preferably, for example, a ratio so that a mole ratio of the metal elements excluding Li : Li : Ca : Sr is within a range of 1 : (greater than or equal to 0.98 and less than or equal to 1.1) : (greater than or equal to 0.0004 and less than or equal to 0.008) : (greater than or equal to 0.0002 and less than or equal to 0.002) in terms of ease of regulating each of the above parameters within the prescribed range. Note that a timing at which the Ca raw material and the Sr raw material are added is not limited to this example. The Ca raw material and the Sr raw material may be added after the synthesis step, or any of in the washing step, after the washing step, in the drying step, after the drying step, or in the adding step, described later. When the metal oxide, the Li raw material, and the like are mixed, another metal raw material may be added as necessary. Here, the other metal raw material refers to an oxide and the like including a metal element other than the metal element constituting the metal oxide, Ca, and Sr.

The mixture of the metal oxide and the Li raw material is calcined under an oxygen atmosphere, for example. The calcining conditions may be a heating rate within greater than or equal to 450°C and less than or equal to 680°C being within a range of greater than 0.1 °C/min and less than or equal to 5.5 °C/min, and a highest reaching temperature being within a range of greater than or equal to 700°C and less than or equal to 850°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. The calcining step may be a multi-step calcination, and a plurality of the first heating rates and the second heating rates may be set in each temperature region as long as the first heating rates and the second heating rates are within the above determined ranges. The particle diameters of the primary particles can be regulated by regulating the calcining conditions. For example, raising the highest reaching temperature can increase the particle diameters of the primary particles.

In the washing step, the lithium-containing composite oxide obtained in the synthesis step is washed with water and dehydrated to obtain a cake-like composition. The washing with water and the dehydration can be performed by known methods under known conditions. The washing with water and the dehydration are performed within a range not eluting lithium from the lithium-containing composite oxide to deteriorate the battery characteristics. Note that the positive electrode active material according to the present embodiment has been washed with water, and thereby a little alkali

component remains.

In the drying step, the cake-like composition obtained in the washing step is dried to obtain a powder composition. The drying step may be performed under a vacuum atmosphere. The drying condition is, for example, at greater than or equal to 150°C and less than or equal to 400°C for greater than or equal to 0.5 hours and less than or equal to 15 hours.

In the adding step, at least one of the sulfonate compound and the sulfonic acid solution is added into a cake-like composition obtained in the washing step or to the powder composition obtained in the drying step. This may adhere the sulfonate compound to the surface of the secondary particles and on the interfaces between the primary particles of the lithium-containing composite oxide. The at least one of the sulfonate compound and the sulfonic acid solution is preferably added to the cake-like composition. The Li raw material remains in the cake-like composition, and this remained Li raw material is dissolved in water contained in the cake-like composition. Thus, also when the sulfonic acid solution is added, the sulfonate compound including Li is formed. The amount of the sulfonate compound or sulfonic acid added is preferably greater than or equal to 0.1 mass% and less than or equal to 1 mass% relative to the mass of the lithium-containing composite oxide. A concentration of the sulfonic acid solution is, for example, greater than or equal to 0.5 mass% and less than or equal to 40 mass%.

[Negative Electrode]

The negative electrode 12 has a negative electrode current collector 40 and a negative electrode mixture layer 41 formed on a surface of the negative electrode current collector 40. The negative electrode mixture layer 41 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 41 may include a negative electrode active material and a binder. A thickness of the negative electrode mixture layer 41 is, for example, greater than or equal to 10 μm and less than or equal to 150 μm on one side of the negative electrode current collector 40. The negative electrode 12 can be produced by, for example, applying a negative electrode slurry including the negative electrode active material, the binder, and the like on the surface of the negative electrode current collector 40, and drying and subsequently compressing the coating film to form the negative electrode mixture layer 41 on both surfaces of the negative electrode current collector 40.

The negative electrode active material included in the negative electrode mixture layer 41 is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0<y<2$), or the like may be used in combination with the graphite.

Example of the binder included in the negative electrode mixture layer 41 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

[Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 13 may have a single-layer structure or a multi-layer structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic

carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ ($1<x<6$, and "n" represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ {"1" and "m" represent integers of greater than or equal to 0}. These lithium salts may be used singly, or a plurality of types thereof may be mixed for use. Among them, $LiPF_6$ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent. In addition, vinylene carbonate or a propanesultone-type additive may be added.

## EXAMPLES

Hereinafter, the present disclosure will be further described with Examples and Comparative Examples, but the present disclosure is not limited to the following Examples.

<Example 1>

[Production of Positive Electrode Active Material]

A composite hydroxide obtained by a coprecipitation method and represented by $[Ni_{0.90}Co_{0.05}Al_{0.05}](OH)_2$ was calcined at 500°C for 8 hours to obtain a metal oxide ($Ni_{0.90}Co_{0.05}Al_{0.05}O_2$). Then, LiOH, the above metal oxide, $Ca(OH)_2$, and $Sr(O)_2$ were mixed so that a mole ratio between: Li; a total amount of Ni, Co, and Al; Ca; and Sr was 1.03:1:0.0025:0.0008 to obtain a mixture. This mixture was calcined under an oxygen flow (at a flow rate of 2 mL/min per 10 $cm^3$ and 5 L/min per kilogram of the mixture) at an oxygen concentration of 95% from room temperature to 650°C at a heating rate of 2.0°C/min, and then calcined from 650°C to 735°C at a heating rate of 0.5°C/min to obtain a lithium-containing composite oxide (the synthesis step). To this lithium-containing composite oxide, water was added so that a slurry concentration was 1500 g/L, the mixture was stirred for 15 minutes, and filtered to obtain a cake-like composition (the washing step). To this cake-like composition, lithium methanesulfonate powder was added (the adding step). An amount of the lithium methanesulfonate added was 0.5 mass% relative to a total mass of the lithium-containing composite oxide. After the adding step, drying was performed under conditions of a vacuum atmosphere at 180°C for 2 hours to obtain a positive electrode active material of Example 1 (the drying step).

The obtained positive electrode active material was measured with an ICP atomic emission spectrometer (iCAP6300, manufactured by Thermo Fisher Scientific K.K.), and as a result, elements shown in the following Table 1 were confirmed as elements except for Li, O, and impurity elements. It was confirmed by TEM-EDX that Ca and Sr were present on the surface of the secondary particles and on the interfaces between the primary particles. By Fourier transformation infrared spectrometry (FT-IR), the presence of lithium sulfonate on the surface of the secondary particles and on the interfaces between the primary particles was confirmed. The ratio of the primary particle outer circumferential length / the secondary particle outer circumferential length was 0.080.

[Production of Positive Electrode]

Mixing 92 parts by mass of the positive electrode active material, 5 parts by mass of acetylene black as a conductive agent, and 3 parts by mass of polyvinylidene fluoride as a binder was performed at this ratio, and this mixture was mixed with N-methyl-2-pyrrolidone (NMP) to prepare a positive electrode slurry. Then, this slurry was applied on both surfaces of a positive electrode current collector composed of aluminum foil having a thickness of 15 $\mu$m, the coating film

was dried, and then the coating film was rolled with a roller, and cut to a predetermined electrode size to produce a positive electrode. At a part of the positive electrode, an exposed portion where the surface of the positive electrode current collector was exposed was provided.

[Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate ($LiPF_6$) was dissolved at a concentration of 1.2 mol/L to prepare a non-aqueous electrolyte.

[Production of Test Cell]

A positive electrode lead was attached to the exposed portion of the positive electrode, and a negative electrode lead was attached to Li metal foil as a negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Evaluation of Direct-Current Resistance (DCIR)]

Under an environment temperature at 25°C, the test cell was charged at a constant current of 0.3 C until 4.2 V, and then charged at a constant voltage of 4.2 V until 0.02 C. Thereafter, the test cell was left to stand for 12 hours, and then discharged at a constant current of 0.5 C for 10 seconds. A value of a difference between an open circuit voltage (OCV) and a closed circuit voltage (CCV) after 10 seconds from the discharge was divided by the discharge current after 10 seconds from the discharge to be specified as direct-current resistance (DCIR).

[Evaluation of Capacity Retention]

Under an environment temperature at 25°C, the test cell was charged at a constant current of 0.3 C until 4.2 V, and then charged at a constant voltage of 4.2 V until 0.02 C. Thereafter, the test cell was discharged at a constant current of 0.5 C until 2.5 V. This charge and discharge was specified as one cycle, and 200 cycles were performed. A capacity retention of the test cell in the charge-discharge cycle was determined with the following formula.

Capacity retention = (Discharge capacity at 200th cycle / Discharge capacity at 1st cycle) $\times$ 100

<Example 2>

A test cell was produced and evaluated in the same manner as in Example 1 except that, in the production of the positive electrode active material, the amount of the $Ca(OH)_2$ added was changed so that the mole ratio of Ca was 0.0015, and the amount of the lithium methanesulfonate added relative to the total mass of the lithium-containing composite oxide was changed to 0.4 mass%.

<Example 3>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0015 and 0.0012, and the amount of the lithium methanesulfonate added relative to the total mass of the lithium-containing composite oxide was changed to 0.3 mass%.

<Example 4>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0015 and 0.0015, and the amount of the lithium methanesulfonate added relative to the total mass of the lithium-containing composite oxide was changed to 0.4 mass%.

<Example 5>

A test cell was produced and evaluated in the same manner as in Example 1 except that, in the production of the positive electrode active material, the amount of the $Ca(OH)_2$ added was changed so that the mole ratio of Ca was 0.0010, and the amount of the lithium methanesulfonate added relative to the total mass of the lithium-containing composite oxide was changed to 0.3 mass%.

<Example 6>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0022 and 0.0003, and the amount of the lithium methanesulfonate added relative to the total mass of the lithium-containing composite oxide was changed to 0.3 mass%.

<Example 7>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0040 and 0.0010, and the amount of the lithium methanesulfonate added relative to the total mass of the lithium-containing composite oxide was changed to 0.9 mass%.

<Example 8>

A test cell was produced and evaluated in the same manner as in Example 1 except that, in the production of the positive electrode active material, the highest reaching temperature in calcining the mixture was changed from 735°C to 745°C. The ratio of the primary particle outer circumferential length / the secondary particle outer circumferential length was 0.160.

<Example 9>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0024 and 0.0010, and the amount of the lithium methanesulfonate added relative to the total mass of the lithium-containing composite oxide was changed to 1.5 mass%.

<Comparative Example 1>

A test cell was produced and evaluated in the same manner as in Example 1 except that, in the production of the positive electrode active material, lithium methanesulfonate was not added.

<Comparative Example 2>

A test cell was produced and evaluated in the same manner as in Example 1 except that, in the production of the positive electrode active material, $Sr(OH)_2$ was not added.

<Comparative Example 3>

A test cell was produced and evaluated in the same manner as in Example 1 except that: in the production of the positive electrode active material, $Ca(OH)_2$ was not added.

<Comparative Example 4>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0010 and 0.0015.

<Comparative Example 5>

A test cell was produced and evaluated in the same manner as in Example 1 except that, in the production of the positive electrode active material, the amounts of the $Ca(OH)_2$ and $Sr(OH)_2$ added were changed so that the mole ratios of Ca and Sr were 0.0100 and 0.0015, and the amount of the lithium methanesulfonate added relative to the total mass of the lithium-containing composite oxide was changed to 0.9 mass%.

<Example 10>

A test cell was produced and evaluated in the same manner as in Example 1 except that, in the production of the positive electrode active material, the composition of the metal oxide obtained by the coprecipitation method was changed to $Ni_{0.90}Mn_{0.10}O_2$, and the amount of the lithium methanesulfonate added relative to the total mass of the lithium-containing composite oxide was changed to 0.4 mass%. The ratio of the primary particle outer circumferential length / the secondary particle outer circumferential length was 0.065.

<Comparative Example 6>

A test cell was produced and evaluated in the same manner as in Example 10 except that, in the production of the positive electrode active material, $Sr(OH)_2$ and lithium methanesulfonate were not added.

<Example 11>

A test cell was produced and evaluated in the same manner as in Example 1 except that, in the production of the positive electrode active material, the composition of the metal oxide obtained by the coprecipitation method was changed to $Ni_{0.85}Mn_{0.15}O_2$, and the amount of the lithium methanesulfonate added relative to the total mass of the lithium-containing composite oxide was changed to 0.9 mass%. The ratio of the primary particle outer circumferential length / the secondary particle outer circumferential length was 0.054.

<Comparative Example 7>

A test cell was produced and evaluated in the same manner as in Example 11 except that, in the production of the positive electrode active material, $Sr(OH)_2$ and lithium methanesulfonate were not added.

<Example 12>

A test cell was produced and evaluated in the same manner as in Example 1 except that, in the production of the positive electrode active material, the composition of the metal oxide obtained by the coprecipitation method was changed to $Ni_{0.90}Co_{0.03}Mn_{0.07}O_2$, and the amount of the lithium methanesulfonate added relative to the total mass of the lithium-containing composite oxide was changed to 0.4 mass%. The ratio of the primary particle outer circumferential length / the secondary particle outer circumferential length was 0.070.

<Comparative Example 8>

A test cell was produced and evaluated in the same manner as in Example 12 except that, in the production of the positive electrode active material, $Sr(OH)_2$ and lithium methanesulfonate were not added.

<Example 13>

A test cell was produced and evaluated in the same manner as in Example 1 except that, in the production of the positive electrode active material, the composition of the metal oxide obtained by the coprecipitation method was changed to $Ni_{0.92}Al_{0.03}Mn_{0.05}O_2$, and the amount of the lithium methanesulfonate added relative to the total mass of the lithium-containing composite oxide was changed to 0.6 mass%. The ratio of the primary particle outer circumferential length / the secondary particle outer circumferential length was 0.066.

<Comparative Example 9>

A test cell was produced and evaluated in the same manner as in Example 13 except that, in the production of the positive electrode active material, $Sr(OH)_2$ and lithium methanesulfonate were not added.

<Example 14>

A test cell was produced and evaluated in the same manner as in Example 1 except that, in the production of the positive electrode active material, the composition of the metal oxide obtained by the coprecipitation method was changed to $Ni_{0.94}Al_{0.06}O_2$, and the amount of the lithium methanesulfonate added relative to the total mass of the lithium-containing composite oxide was changed to 0.7 mass%. The ratio of the primary particle outer circumferential length / the secondary particle outer circumferential length was 0.077.

<Comparative Example 10>

A test cell was produced and evaluated in the same manner as in Example 14 except that, in the production of the positive electrode active material, $Sr(OH)_2$ and lithium methanesulfonate were not added.

Table 1 to Table 6 separately show the evaluation results of the test cells of Examples and Comparative Examples. Table 1 to Table 6 also show the composition of the metal oxide, the contents of Ca and Sr, the Ca/Sr ratio, the total content of Ca and Sr, the ratio of the primary particle outer circumferential length / the secondary particle outer circumferential length, and the amount of lithium methanesulfonate added. DCIR and the capacity retention of the test cells of Examples 1 to 9 and Comparative Examples 2 to 5 shown in Table 1 are values relative to DCIR and the capacity retention of the test cell of Comparative Example 1 being 100. In Table 2 to Table 6, DCIR and the capacity retention of Example are values relative to DCIR and the capacity retention of the test cell of Comparative Example being 100.

[Table 1]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 1 | $Ni_{0.9}Co_{0.05}Al_{0.05}$ | 0.25 | 0.08 | 3.13 | 0.33 | 0.080 | 0.5 | 94 | 107 |
| Example 2 | | 0.15 | 0.08 | 1.88 | 0.23 | 0.068 | 0.4 | 95 | 105 |
| Example 3 | | 0.15 | 0.12 | 1.25 | 0.27 | 0.073 | 0.3 | 97 | 104 |
| Example 4 | | 0.15 | 0.15 | 1.00 | 0.30 | 0.076 | 0.4 | 95 | 103 |
| Example 5 | | 0.10 | 0.08 | 1.25 | 0.18 | 0.072 | 0.3 | 97 | 102 |
| Example 6 | | 0.22 | 0.03 | 7.33 | 0.25 | 0.070 | 0.3 | 97 | 103 |
| Example 7 | | 0.40 | 0.10 | 4.00 | 0.50 | 0.061 | 0.9 | 92 | 105 |
| Example 8 | | 0.25 | 0.08 | 3.13 | 0.33 | 0.160 | 0.5 | 99 | 102 |
| Example 9 | | 0.24 | 0.10 | 2.40 | 0.34 | 0.075 | 1.5 | 95 | 101 |
| Comparative Example 1 | | 0.25 | 0.08 | 3.13 | 0.33 | 0.084 | 0 | 100 | 100 |
| Comparative Example 2 | | 0.25 | 0 | - | 0.25 | 0.080 | 0.5 | 98 | 96 |
| Comparative Example 3 | | 0 | 0.08 | 0 | 0.08 | 0.076 | 0.5 | 94 | 86 |
| Comparative Example 4 | | 0.10 | 0.15 | 0.67 | 0.25 | 0.094 | 0.5 | 97 | 99 |
| Comparative Example 5 | | 1.00 | 0.15 | 6.67 | 1.15 | 0.115 | 0.9 | 101 | 109 |

[Table 2]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 10 | $Ni_{0.9}Mn_{0.1}$ | 0.25 | 0.08 | 3.13 | 0.33 | 0.065 | 0.4 | 92 | 103 |
| Comparative Example 6 | | 0.25 | 0 | - | 0.25 | 0.062 | 0 | 100 | 100 |

[Table 3]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 11 | $Ni_{0.85}Mn_{0.15}$ | 0.25 | 0.08 | 3.13 | 0.33 | 0.054 | 0.9 | 87 | 102 |
| Comparative Example 7 | | 0.25 | 0 | - | 0.25 | 0.058 | 0 | 100 | 100 |

[Table 4]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 12 | $Ni_{0.9}Co_{0.03}M_{0.07}$ | 0.25 | 0.08 | 3.13 | 0.33 | 0.070 | 0.4 | 95 | 104 |
| Comparative Example 8 | | 0.25 | 0 | - | 0.25 | 0.071 | 0 | 100 | 100 |

[Table 5]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 13 | $Ni_{0.92}Al_{0.03}Mn_{0.05}$ | 0.25 | 0.08 | 3.13 | 0.33 | 0.066 | 0.6 | 93 | 102 |
| Comparative Example 9 | | 0.25 | 0 | - | 0.25 | 0.068 | 0 | 100 | 100 |

[Table 6]

| | Positive electrode active material | | | | | | | Evaluation results | |
|---|---|---|---|---|---|---|---|---|---|
| | Composition of metal oxide | Ca content [mol%] | Sr content [mol%] | Ca/Sr ratio | Ca content + Sr content [mol%] | Ratio of primary particle outer circumferential length / secondary particle outer circumferential length | Amount of lithium methanesulfonate added [mass%] | DCIR | Capacity retention |
| Example 14 | $Ni_{0.94}Al_{0.06}$ | 0.25 | 0.08 | 3.13 | 0.33 | 0.077 | 0.7 | 92 | 105 |
| Comparative Example 10 | | 0.25 | 0 | - | 0.25 | 0.080 | 0 | 100 | 100 |

In Table 1 to Table 6, the test cells of Examples had improved output characteristics compared with the test cells of Comparative Examples. It is found that the direct-current resistance can be reduced while improving the charge-discharge cycle characteristics of the battery by containing the predetermined amounts of Ca and Sr in the lithium-containing composite oxide at the predetermined ratio and by allowing the sulfonate compound to be present on the surfaces of the secondary particles or on the interfaces between the primary particles of the lithium-containing composite oxide.

REFERENCE SIGNS LIST

10 Non-aqueous electrolyte secondary battery, 11 Positive electrode, 12 Negative electrode, 13 Separator, 14 Electrode assembly, 15 Battery case, 16 Exterior housing can, 17 Sealing assembly, 18, 19 Insulating plate, 20 Positive electrode tab, 21 Negative electrode tab, 22 Grooved portion, 23 Bottom plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer

## Claims

1. A positive electrode active material for a non-aqueous electrolyte secondary battery, including a lithium-containing composite oxide having a layered rock-salt structure, wherein

   the lithium-containing composite oxide contains at least Ni, Ca, and Sr, and is represented by the general formula $Li_aNi_xCo_yAl_zM1_wCa_sSr_tO_{2-b}$, wherein $0.8 \leq a \leq 1.2$, $0.80 \leq x \leq 0.95$, $0 \leq y \leq 0.20$, $0 \leq z \leq 0.20$, $0 \leq w \leq 0.20$, $0.0004 \leq s \leq 0.008$, $0.0002 \leq t \leq 0.002$, $0 \leq b < 0.05$, $x+y+z+tw=1$, $1 \leq s/t \leq 40$, and M1 represents at least one element selected from the group consisting of Mn, Fe, Ti, Si, Nb, Zr, Mo, and Zn,
   in the lithium-containing composite oxide, a mole ratio of a content of Ca to a content of Sr (Ca/Sr ratio) is greater than or equal to 1,
   a sum of the content of Ca and the content of Sr in the lithium-containing composite oxide is greater than or equal to 0.05 mol% and less than or equal to 1 mol% relative to a total amount of moles of metal elements in the lithium-containing composite oxide excluding Li, Ca, and Sr,
   the lithium-containing composite oxide includes secondary particles each formed by aggregation of primary particles, and
   on surfaces of the secondary particles or on interfaces between the primary particles, a sulfonate compound represented by the formula I is present,

   [Formula 1]

   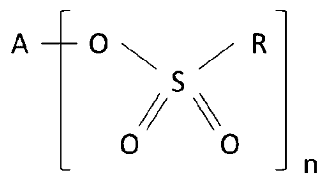

   (I)

   wherein A represents a group I element or a group II element, R represents a hydrocarbon group, and "n" represents 1 or 2.

2. The positive electrode active material for a non-aqueous electrolyte secondary battery according to claim 1, wherein a content of Ni in the lithium-containing composite oxide is greater than or equal to 80 mol% relative to a total amount of metal elements excluding Li, Ca, and Sr.

3. The positive electrode active material for a non-aqueous electrolyte secondary battery according to claim 1 or 2, wherein a content of Ca in the lithium-containing composite oxide is less than or equal to 0.8 mol% relative to a total amount of metal elements in the lithium-containing composite oxide excluding Li, Ca, and Sr.

4. The positive electrode active material for a non-aqueous electrolyte secondary battery according to any one of claims 1 to 3, wherein a content of Sr in the lithium-containing composite oxide is less than or equal to 0.2 mol% relative to a total amount of metal elements in the lithium-containing composite oxide excluding Li, Ca, and Sr.

5. The positive electrode active material for a non-aqueous electrolyte secondary battery according to any one of claims

1 to 4, wherein a ratio of an outer circumferential length of the primary particles divided by an outer circumferential length of the secondary particles is less than or equal to 0.12.

6. The positive electrode active material for a non-aqueous electrolyte secondary battery according to any one of claims 1 to 5, wherein an amount of the sulfonate compound present on the surfaces of the secondary particles and on the interfaces between the primary particles is greater than or equal to 0.1 mass% and less than or equal to 1 mass% relative to a mass of the lithium-containing composite oxide.

7. A non-aqueous electrolyte secondary battery (10), comprising:

a positive electrode (11) including the positive electrode active material for a non-aqueous electrolyte secondary battery according to any one of claims 1 to 6;
a negative electrode (12); and
a non-aqueous electrolyte.

## Patentansprüche

1. Positives Elektrodenaktivmaterial für eine Sekundärbatterie mit nichtwässrigem Elektrolyt, umfassend ein lithiumhaltiges Kompositoxid mit einer geschichteten Steinsalzstruktur,
wobei

das lithiumhaltige Kompositoxid zumindest Ni, Ca und Sr enthält und durch die allgemeine Formel $Li_aNi_xCo_yAl_zM1_wCa_sSr_tO_{2-b}$ dargestellt wird, wobei $0,8 \leq a \leq 1,2$, $0,80 \leq x \leq 0,95$, $0 \leq y \leq 0,20$, $0 \leq z \leq 0,20$, $0 \leq w \leq 0,20$, $0,0004 \leq s \leq 0,008$, $0,0002 \leq t \leq 0,002$, $0 \leq b < 0,05$, $x+y+z+w=1$, $1 \leq s/t \leq 40$, und M1 mindestens ein Element darstellt, das aus der Gruppe bestehend aus Mn, Fe, Ti, Si, Nb, Zr, Mo und Zn ausgewählt ist,
in dem lithiumhaltigen Kompositoxid ein Molverhältnis eines Gehalts an Ca zu einem Gehalt an Sr (Ca/Sr-Verhältnis) größer als oder gleich 1 ist,
eine Summe des Gehalts an Ca und des Gehalts an Sr in dem lithiumhaltigen Kompositoxid größer als oder gleich 0,05 Mol-% und kleiner als oder gleich 1 Mol-% bezogen auf eine Gesamtmenge an Molen von Metallelementen in dem lithiumhaltigen Kompositoxid unter Ausschluss von Li, Ca und Sr ist, das lithiumhaltige Kompositoxid Sekundärpartikel umfasst, die jeweils durch Aggregation von Primärpartikeln gebildet sind, und
auf Oberflächen der Sekundärpartikel oder an Grenzflächen zwischen den Primärpartikeln eine Sulfonatverbindung, die durch die Formel I dargestellt wird, vorhanden ist,

[Formel 1]

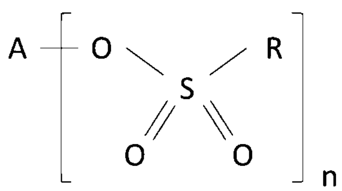

(I)

wobei A ein Element der Gruppe I oder ein Element der Gruppe II darstellt, R eine Kohlenwasserstoffgruppe darstellt und "n" 1 oder 2 darstellt.

2. Positives Elektrodenaktivmaterial für eine Sekundärbatterie mit nichtwässrigem Elektrolyt nach Anspruch 1, wobei ein Gehalt an Ni in dem lithiumhaltigen Kompositoxid größer als oder gleich 80 Mol-% bezogen auf eine Gesamtmenge an Metallelementen unter Ausschluss von Li, Ca und Sr ist.

3. Positives Elektrodenaktivmaterial für eine Sekundärbatterie mit nichtwässrigem Elektrolyt nach Anspruch 1 oder 2, wobei ein Gehalt an Ca in dem lithiumhaltigen Kompositoxid kleiner als oder gleich 0,8 Mol-% bezogen auf eine Gesamtmenge an Metallelementen in dem lithiumhaltigen Kompositoxid unter Ausschluss von Li, Ca und Sr ist.

4. Positives Elektrodenaktivmaterial für eine Sekundärbatterie mit nichtwässrigem Elektrolyt nach einem der Ansprüche 1 bis 3, wobei ein Gehalt an Sr in dem lithiumhaltigen Kompositoxid kleiner als oder gleich 0,2 Mol-% bezogen auf eine Gesamtmenge an Metallelementen in dem lithiumhaltigen Kompositoxid unter Ausschluss von Li, Ca und Sr ist.

5. Positives Elektrodenaktivmaterial für eine Sekundärbatterie mit nichtwässrigem Elektrolyt nach einem der Ansprüche 1 bis 4, wobei ein Verhältnis einer äußeren Umfangslänge der Primärpartikel dividiert durch eine äußere Umfangslänge der Sekundärpartikel kleiner als oder gleich 0,12 ist.

6. Positives Elektrodenaktivmaterial für eine Sekundärbatterie mit nichtwässrigem Elektrolyt nach einem der Ansprüche 1 bis 5, wobei eine Menge der Sulfonatverbindung, die auf den Oberflächen der Sekundärpartikel und an den Grenzflächen zwischen den Primärpartikeln vorhanden ist, größer als oder gleich 0,1 Masse-% und kleiner als oder gleich 1 Masse-% bezogen auf eine Masse des lithiumhaltigen Kompositoxids ist.

7. Sekundärbatterie mit nichtwässrigem Elektrolyt (10), umfassend:

   eine positive Elektrode (11), die das positive Elektrodenaktivmaterial für eine Sekundärbatterie mit nichtwässrigem Elektrolyt nach einem der Ansprüche 1 bis 6 umfasst;
   eine negative Elektrode (12); und
   einen nichtwässrigen Elektrolyt.

## Revendications

1. Matériau actif d'électrode positive pour une batterie secondaire à électrolyte non aqueux, comprenant un oxyde composite contenant du lithium ayant une structure de type sel gemme en couches,
   dans lequel

   l'oxyde composite contenant du lithium contient au moins Ni, Ca et Sr, et est représenté par la formule générale $Li_aNi_xCo_yAl_zMl_wCa_sSr_tO_{2-b}$, dans laquelle $0{,}8 \leq a \leq 1{,}2$, $0{,}80 \leq x \leq 0{,}95$, $0 \leq y \leq 0{,}20$, $0 \leq z \leq 0{,}20$, $0 \leq w \leq 0{,}20$, $0{,}0004 \leq s \leq 0{,}008$, $0{,}0002 \leq t \leq 0{,}002$, $0 \leq b < 0{,}05$, $x+y+z+w=1$, $1 \leq s/t \leq 40$, et M1 représente au moins un élément choisi dans le groupe constitué de Mn, Fe, Ti, Si, Nb, Zr, Mo et Zn,
   dans l'oxyde composite contenant du lithium, un rapport molaire d'une teneur en Ca à une teneur en Sr (rapport Ca/Sr) est supérieur ou égal à 1,
   une somme de la teneur en Ca et de la teneur en Sr dans l'oxyde composite contenant du lithium est supérieure ou égale à 0,05 % en moles et inférieure ou égale à 1 % en moles par rapport à une quantité totale de moles d'éléments métalliques dans l'oxyde composite contenant du lithium à l'exclusion de Li, Ca et Sr,
   l'oxyde composite contenant du lithium comprend des particules secondaires formées chacune par agrégation de particules primaires, et
   sur des surfaces des particules secondaires ou sur des interfaces entre les particules primaires, un composé sulfonate représenté par la formule I est présent,

   [Formule 1]

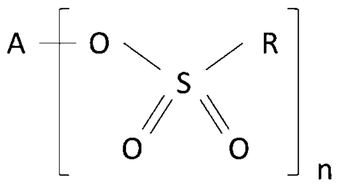

   (I)

   dans laquelle A représente un élément du groupe I ou un élément du groupe **II,** R représente un groupe hydrocarbure, et « n » représente 1 ou 2.

2. Matériau actif d'électrode positive pour une batterie secondaire à électrolyte non aqueux selon la revendication 1, dans lequel une teneur en Ni dans l'oxyde composite contenant du lithium est supérieure ou égale à 80 % en moles par rapport à une quantité totale d'éléments métalliques à l'exclusion de Li, Ca et Sr.

3. Matériau actif d'électrode positive pour une batterie secondaire à électrolyte non aqueux selon la revendication 1 ou 2, dans lequel une teneur en Ca dans l'oxyde composite contenant du lithium est inférieure ou égale à 0,8 % en moles par rapport à une quantité totale d'éléments métalliques dans l'oxyde composite contenant du lithium à l'exclusion de Li, Ca et Sr.

4. Matériau actif d'électrode positive pour une batterie secondaire à électrolyte non aqueux selon l'une quelconque des

revendications 1 à 3, dans lequel une teneur en Sr dans l'oxyde composite contenant du lithium est inférieure ou égale à 0,2 % en moles par rapport à une quantité totale d'éléments métalliques dans l'oxyde composite contenant du lithium à l'exclusion de Li, Ca et Sr.

**5.** Matériau actif d'électrode positive pour une batterie secondaire à électrolyte non aqueux selon l'une quelconque des revendications 1 à 4, dans lequel un rapport entre la longueur de circonférence extérieure des particules primaires et celle des particules secondaires est inférieur ou égal à 0,12.

**6.** Matériau actif d'électrode positive pour une batterie secondaire à électrolyte non aqueux selon l'une quelconque des revendications 1 à 5, dans lequel une quantité du composé sulfonate présent sur les surfaces des particules secondaires et sur les interfaces entre les particules primaires est supérieure ou égale à 0,1 % en masse et inférieure ou égale à 1 % en masse par rapport à une masse de l'oxyde composite contenant du lithium.

**7.** Batterie secondaire à électrolyte non aqueux (10), comprenant :

une électrode positive (11) comprenant le matériau actif d'électrode positive pour une batterie secondaire à électrolyte non aqueux selon l'une quelconque des revendications 1 à 6 ;
une électrode négative (12) ; et
un électrolyte non aqueux.

Figure 1

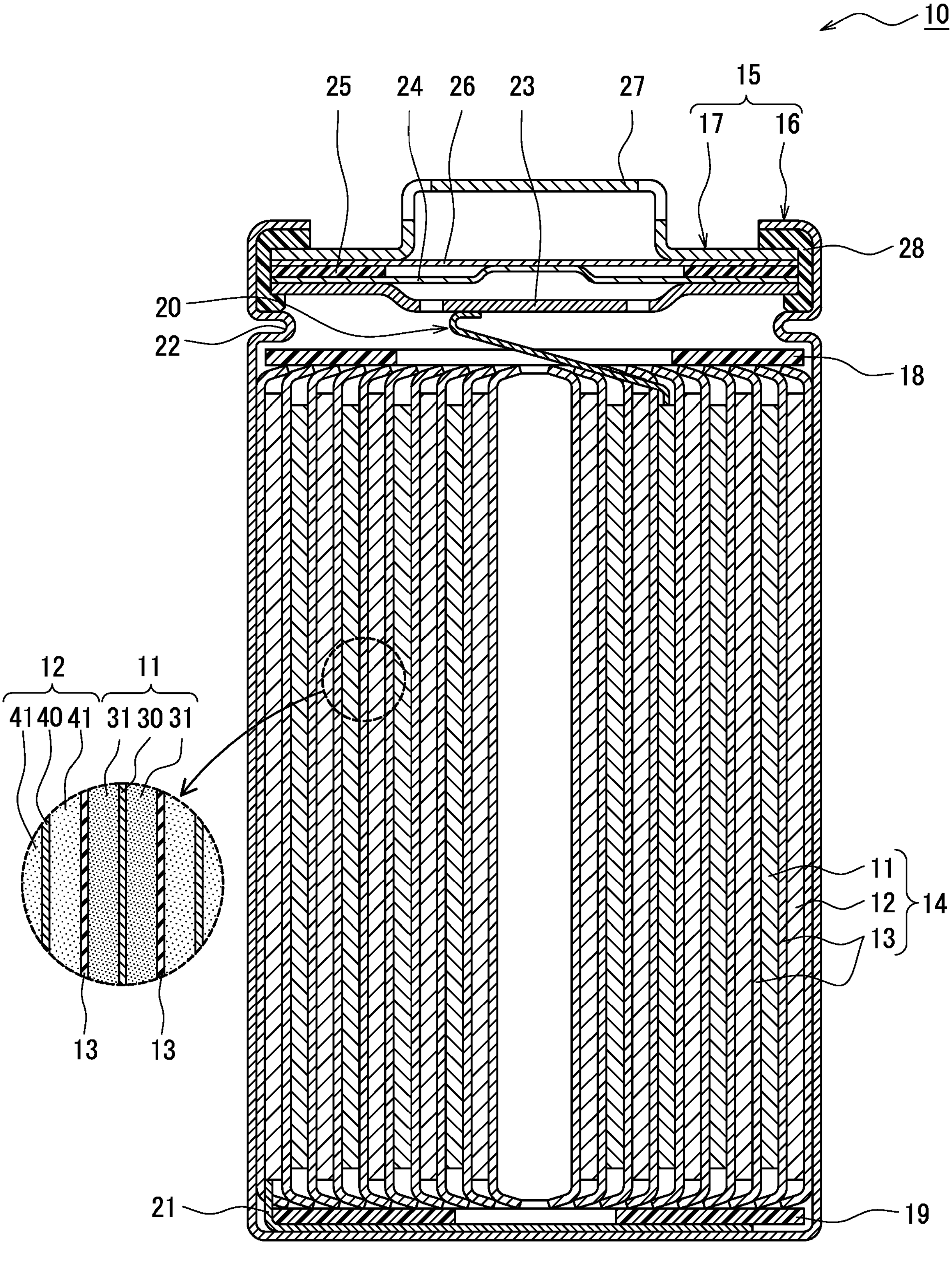
10
15
25
24
26
23
27
17
16
28
20
22
18
12
11
41 40 41
31 30 31
11
12
13
14
13
13
21
19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018006164 A
- WO 2021106324 A